# EUROPÄISCHE PATENTSCHRIFT

(11) **EP 2 076 660 B1**
(45) Veröffentlichungstag und Bekanntmachung des Hinweises auf die Patenterteilung: **26.10.2011**
(21) Anmeldenummer: 07802530.1
(22) Anmeldetag: 08.08.2007
(51) Int. Cl.: F01N 3/20, B60K 15/00

(54) **TANK ZUR BEVORRATUNG EINES REDUKTIONSMITTELS**
TANK FOR STORING A REDUCING AGENT
RÉSERVOIR D'ALIMENTATION POUR UN AGENT DE RÉDUCTION

(30) Priorität: 04.10.2006 DE 102006046899
(43) Veröffentlichungstag der Anmeldung: 08.07.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2007/058213
(87) Internationale Veröffentlichungsnummer: WO 2008/040589

(56) Entgegenhaltungen:
- WO-A-2005/066471
- WO-A-2005/073527
- WO-A-2006/046363
- WO-A-2007/017080
- WO-A-2007/031467
- DE-A1- 19 841 770

## Beschreibung

### Stand der Technik

Die Erfindung betrifft einen Tank zur Bevorratung eines Reduktionsmittels gemäß dem Oberbegriff des Anspruchs 1.

Bei Verbrennungskraftmaschinen, insbesondere bei dieselbetriebenen Verbrennungskraftmaschinen, muss aufgrund der in den nächsten Jahren anstehenden verschärften Abgasgesetzgebung unter anderem der Anteil an Stickoxiden im Abgas reduziert werden. Zur Reduzierung des Stickoxid-Anteils im Abgas wird zum Beispiel eine selektive katalytische Reduktion durchgeführt, bei der die Stickoxide mit Hilfe von Reduktionsmitteln zu Stickstoff und Wasser reduziert werden. Als Reduktionsmittel wird zum Beispiel eine wässrige Harnstofflösung eingesetzt.

Das Reduktionsmittel wird üblicherweise in einem Tank gelagert und über eine Leitung vom Tank zu einem Dosiermodul befördert, mit dem das Reduktionsmittel zum Beispiel in das Abgasrohr eingespritzt wird.

Die derzeit eingesetzten üblichen Reduktionsmittel gefrieren je nach zugesetztem Anti-Frostmittel bei einer Temperatur im Bereich von -11 °C bis -40 °C. Um den Anforderungen an die Abgaszusammensetzung genügen zu können, muss gewährleistet werden, dass auch bei Temperaturen unterhalb von -11 °C nach einer akzeptablen Zeit ausreichend Reduktionsmittel bereitsteht. Dies macht es unter Umständen erforderlich, das Reduktionsmittel aufzutauen. Bei Nutzkraftfahrzeugen wird zum Beispiel eine zuschaltbare Beheizung eingesetzt, die über das Kühlwasser der Verbrennungskraftmaschine betrieben wird. Diese zuschaltbare Beheizung ist in der Lage, den Inhalt des gesamten Tanks aufzutauen.

Da jedoch zum Beispiel bei Personenkraftwagen die Verbrennungskraftmaschine und der Tank für das Reduktionsmittel im Allgemeinen räumlich weit voneinander getrennt liegen, ist eine Beheizung des Tanks für das Reduktionsmittel mit Hilfe des Kühlwassers der Verbrennungskraftmaschine schwierig. Aus diesem Grund wird bei Personenkraftwagen ein begrenztes Volumen des Tanks, welches in einem Teilbehälter im Tank aufgenommen ist, elektrisch aufgeheizt. Bei den derzeit eingesetzten Tanks für das Reduktionsmittel können mit diesem aufgetauten Volumen bis zu 1000 km zurückgelegt werden. In gemäßigten Klimazonen wird dieses aufgetaute Teilvolumen in Verbindung mit dem Einsatz von mit Frostschutzmittel additivierten Reduktionsmitteln als ausreichend betrachtet, um einen stetigen Betrieb gewährleisten zu können. Hierbei wird auch berücksichtigt, dass das Durchfrieren des Reduktionsmittels im Tank in Verbindung mit einer gezielten Isolation und einem gerichteten Einfreieren mehrere Tage benötigen kann.

WO 2007/031467 A2 bezieht sich auf ein Fahrzeugtank für ein flüssiges Reduktionsmittel, insbesondere für eine Harnstofflösung. Es wird ein Fahrzeugtank offenbart, der zur Aufnahme eines flüssigen, beispielsweise wässrigen Reduktionsmittels dient. Dabei handelt es sich insbesondere um eine Harnstofflösung zur Reduktion von Stickoxiden im Abgas von Brennkraftmaschinen, wobei der Fahrzeugtank eine Behälterwand aufweist, die aus Kunststoff hergestellt ist.

DE 198 41 770 A1 bezieht sich auf eine Vorrichtung und ein Verfahren zur Füllstandsmessung. Es ist ein Sensorelement vorgesehen, mit dem ein erster Wert einer von einem Füllstand des Behälters und von mindestens einem Parameter der Flüssigkeit abhängigen Messgröße messbar ist. Ein Referenzsensorelement zur Messung eines zweiten Wertes der Messgröße ist derart in der Flüssigkeit angeordnet, dass der zweite Wert abhängig von dem oder jedem Parameter und bei einem Füllstand oberhalb eines Mindestfiillstandes unabhängig vom Füllstand ist.

### Offenbarung der Erfindung

### Vorteile der Erfindung

Der erfindungsgemäße Tank zur Bevorratung eines Reduktionsmittels umfasst einen Außenbehälter, in dem ein Innenbehälter aufgenommen ist, wobei im Innenbehälter ein Heizelement aufgenommen ist. Mit einer ersten Entnahmeleitung kann Flüssigkeit aus dem Innenbehälter entnommen werden. Der Innenbehälter ist so mit dem Außenbehälter verbunden, dass Reduktionsmittel aus dem Innenbehälter in den Außenbehälter strömen kann.

Vorteil des erfindungsgemäß ausgebildeten Tanks ist es, dass mit diesem ein Tank zur Bevorratung bereitgestellt wird, mit der auch ein Einsatz außerhalb des gemäßigten Klimabereiches, d.h. bei tieferen, länger andauernden Umgebungstemperaturen, ermöglicht wird. Wenn das Reduktionsmittel im Außenbehälter und im Innenbehälter durchgefroren ist, wird durch das Heizelement zunächst das Reduktionsmittel im Innenbehälter aufgetaut. Diese Flüssigkeit gelangt in den Außenbehälter, wodurch auch die im Außenbehälter enthaltene, durchgefrorene Flüssigkeit aufgetaut wird.

In der Erfindung ist im Innenbehälter mindestens ein Durchbruch ausgebildet, durch welchen Flüssigkeit aus dem Außenbehälter in den Innenbehälter und umgekehrt strömen kann. Bei Bewegung des Tanks schwappt bereits aufgetautes Reduktionsmittel durch den mindestens einen Durchbruch aus dem Innenbehälter in den Außenbehälter. Das Auftauen der im Außenbehälter enthaltenen, durchgefrorenen Flüssigkeit erfolgt durch diese überschwappende Flüssigkeit. Die Bewegung des Tanks ergibt sich zum Beispiel durch Bewegungen eines Kraftfahrzeuges während der Fahrt.

Um den Auftauvorgang im Außenbehälter zu unterstützen, sind in der erfindung am Innenbehälter Wärmeleitbleche ausgebildet, die in den Außenbehälter ragen. Sobald im Innenbehälter eine höhere Temperatur herrscht als im Außenbehälter, wird über die Wärmeleitbleche Wärme an das Reduktionsmittel im Außenbehälter abgegeben. Auf diese Weise wird das Reduktionsmittel im Außenbehälter in Umgebung um die Wärmeleitbleche ebenfalls aufgetaut. Die Wärmeleitbleche können dabei in jeder, dem Fachmann bekannten Form ausgebildet sein. Bevorzugt umgeben die Wärmeleitbleche als Rippen den Innenbehälter. Die Wärmeleitbleche können dabei strukturiert oder glatt ausgeführt sein.

In den Erfindung ist der mindestens eine Durchbruch im Innenbehälter so angeordnet, dass das Heizelement vollständig von Flüssigkeit bedeckt ist, wenn der Innenbehälter bis zu dem mindestens einen Durchbruch mit Flüssigkeit gefüllt ist. Hierdurch wird gewährleistet, dass vom Heizelement Wärme nur an Flüssigkeit abgegeben wird. Hierdurch lässt sich ein effektiveres Auftauen erzielen, da die Wärmeübertragung an Flüssigkeiten besser ist als die Wärmeübertragung an Gas. Es wird vermieden, dass vom Heizelement Wärme an Umgebungsluft im Innenbehälter abgegeben wird.

In den Innenbehälter mündet vorzugsweise ein Rücklauf, über den nicht verbrauchtes flüssiges Reduktionsmittel zurückgeführt wird. Das über den Rücklauf zurückgeführte flüssige Reduktionsmittel unterstützt den Auftauprozess im Tank zur Bevorratung des Reduktionsmittels ebenfalls. Durch den mindestens einen Durchbruch im Innenbehälter schwappt das zurückgeführte flüssige Reduktionsmittel auch in den Außenbehälter und unterstützt so ebenfalls das Auftauen des Reduktionsmittels im Außenbehälter.

In einer weiteren Ausführungsform ist der Innenbehälter von einem trichterförmig ausgebildeten Element umschlossen. Das trichterförmige Element ist vorzugsweise aus einem Material gefertigt, das eine geringere Dichte aufweist als das Reduktionsmittel. Hierdurch wird sichergestellt, dass das trichterförmige Element auf dem Reduktionsmittel schwimmt. Der Werkstoff, aus dem das trichterförmige Element gefertigt ist, ist vorzugsweise gut wärmeleitfähig. Zwischen dem trichterförmigen Element und dem Innenbehälter ist ein Spalt ausgebildet, durch welchen flüssiges Reduktionsmittel, welches zum Beispiel über einen Rücklauf auf das trichterförmige Element fließt, entlang der Außenwandung des Innenbehälters strömen kann, wodurch das im Außenbehälter enthaltene Reduktionsmittel aufgetaut wird. Über den Rücklauf fließt zum Beispiel nicht verbrauchtes Reduktionsmittel zurück in den Tank. Um den Spalt zwischen dem trichterförmigen Element und dem Innenbehälter konstant zu halten, ist das trichterförmige Element zum Beispiel über eine Führung in axialer Richtung beweglich. Die Führung kann dabei zum Beispiel an der Innenseite des trichterförmigen Elementes, d. h. dem Innenbehälter zugewandt ausgebildet sein. Alternativ ist es auch möglich, dass das trichterförmige Element zum Beispiel durch eine axiale und/oder radiale Aufhängung im Inneren des Außenbehälters geführt wird.

In einer bevorzugten Ausführungsform ist im trichterförmigen Element eine umlaufende Nut ausgebildet, in der sich Flüssigkeit, die über den Rücklauf zugeführt wird, zunächst sammelt. Sobald die Nut mit Flüssigkeit gefüllt ist, fließt Flüssigkeit aus der Nut über das trichterförmige Element in den Außenbehälter. Durch die in der Nut gesammelte Flüssigkeit wird das trichterförmige Element aufgewärmt. Diese Wärme gibt es an das Reduktionsmittel im Außenbehälter ab. Auf diese Weise wird das Auftauen zusätzlich unterstützt.

Im Boden des Außenbehälters ist vorzugsweise ein Sumpf ausgebildet. Durch den Sumpf wird sichergestellt, dass auch bei einer Neigung des Tanks zur Bevorratung des Reduktionsmittels, zum Beispiel bei Schräglagen oder Kurvenfahrt, nur Flüssigkeit und keine Luft angesaugt wird. Hierzu mündet in einer Ausführungsform eine zweite Entnahmeleitung, mit der Flüssigkeit aus dem Außenbehälter entnommen werden kann, vorzugsweise im Sumpf.

Die erste Entnahmeleitung, mit der Flüssigkeit aus dem Innenbehälter entnommen werden kann, mündet vorzugsweise in der Nähe des Bodens des Innenbehälters. Hierdurch wird sichergestellt, dass auch dann, wenn nur noch eine geringe Menge an Flüssigkeit im Innenbehälter enthalten ist, diese aus dem Innenbehälter entnommen werden kann.

In einer bevorzugten Ausführungsform münden die erste Entnahmeleitung und die zweite Entnahmeleitung jeweils in der Nähe des Heizelementes im Innenbehälter beziehungsweise im Außenbehälter. Da das Reduktionsmittel zunächst in unmittelbarer Umgebung um das Heizelement aufgetaut wird, wird durch diese Anordnung gewährleistet, dass bereits nach kurzer Zeit flüssiges Reduktionsmittel über die Entnahmeleitungen aus dem Tank zur Bevorratung des Reduktionsmittels entnommen werden kann.

Um das flüssige Reduktionsmittel aus dem Tank zur Bevorratung entnehmen zu können, sind die erste Entnahmeleitung und die zweite Entnahmeleitung im Allgemeinen mit einer Förderpumpe verbunden. Mit Hilfe der Förderpumpe wird das flüssige Reduktionsmittel über die erste Entnahmeleitung und die zweite Entnahmeleitung aus dem Innenbehälter beziehungsweise dem Außenbehälter gesaugt. Vorzugsweise sind in der ersten Entnahmeleitung und in der zweiten Entnahmeleitung Drosselelemente ausgebildet. Die Drosselelemente sind dabei vorzugsweise so aufeinander abgestimmt, dass gleichzeitig aus dem Innenbehälter und aus dem Außenbehälter flüssiges Reduktionsmittel entnommen wird, wenn sowohl im Innenbehälter als auch im Außenbehälter flüssiges Reduktionsmittel enthalten ist. Um ein schnelles Auftauen nach dem Durchfrieren zu ermöglichen, sind die Drosselelemente vorzugsweise so ausgelegt, dass aufgrund des Rücklaufes von Reduktionsmittel über den Rücklauf der Innenbehälter immer bis zu dem mindestens einen Durchbruch gefüllt ist.

### Kurze Beschreibung der Zeichnungen

Ein Ausführungsbeispiel der Erfindung ist in der Zeichnung dargestellt und in der nachfolgenden Beschreibung näher erläutert.

### Es zeigen

- Figur 1: einen Tank zur Bevorratung eines Reduktionsmittels mit Durchbrüchen im Innenbehälter,
- Figur 2: einen Tank zur Bevorratung eines Reduktionsmittels mit Wärmeleitblechen am Innenbehälter,
- Figur 3: einen Tank zur Bevorratung eines Reduktionsmittels, bei dem der Innenbehälter von einem trichterförmigen Element umschlossen ist,
- Figur 4: ein trichterförmiges Element mit darin ausgebildeter Nut.

### Ausführungsformen der Erfindung

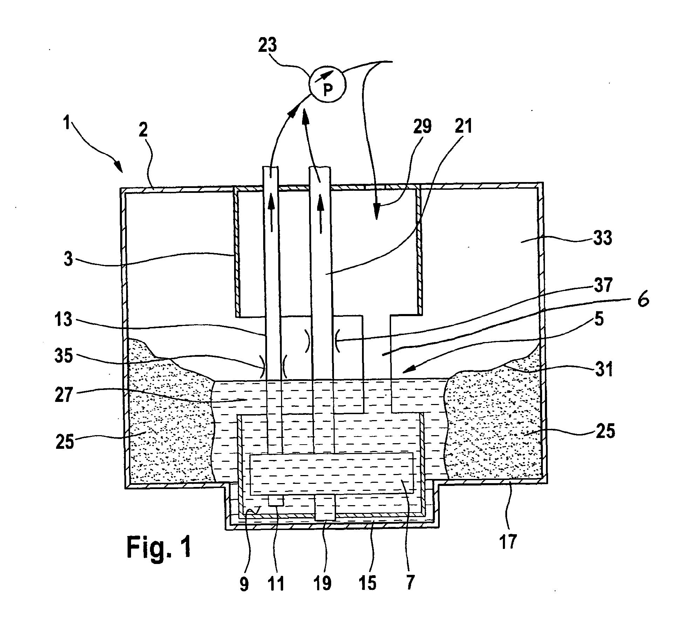

In Figur 1 ist ein Tank zur Bevorratung eines Reduktionsmittels mit Durchbrüchen im Innenbehälter dargestellt.

Erfindungsgemäß ist im Außenbehälter 2 und im Innenbehälter 3 ein Reduktionsmittel enthalten. Dieses ist zum Beispiel eine wässrige Harnstofflösung, die als Reduktionsmittel eingesetzt wird, um Stickoxide in Stickstoff und Wasser zu reduzieren. Hierzu wird das Reduktionsmittel vor einem SCR-Katalysator (Selective Catalytic Reduction) in ein Abgasrohr der Verbrennungskraftmaschine eingespritzt. Das Einspritzen des Reduktionsmittels erfolgt zum Beispiel über ein Dosierventil. Im heißen Abgas der Verbrennungskraftmaschine verdampft das Reduktionsmittel und bildet Ammoniak, der sich im SCR-Katalysator einlagert. Der im Katalysator eingelagerte Ammoniak wandelt die im Abgas enthaltenen Stickoxide in elementaren Stickstoff und Wasserdampf um. Das Reduktionsmittel ist hierbei in einem erfindungsgemäß ausgebildeten Tank 1 bevorratet.

Der Tank 1 umfasst einen Außenbehälter 2, in dem ein Innenbehälter 3 aufgenommen ist. Im Innenbehälter 3 ist mindestens ein Durchbruch 5 ausgebildet, durch welchen Flüssigkeit aus dem Innenbehälter 3 in den Außenbehälter 2 und umgekehrt strömen kann. Zwischen zwei benachbarten Durchbrüchen 5 verbleibt jeweils ein Steg 6 in der Wandung des Innenbehälters 3.

Damit auch bei Temperaturen, die unterhalb der Erstarrungstemperatur des Reduktionsmittels liegen, flüssiges Reduktionsmittel entnommen werden kann, ist im Innenbehälter 3 ein Heizelement 7 aufgenommen. Das Heizelement 7 ist vorzugsweise ein elektrisches Heizelement, es kann jedoch auch jedes andere, dem Fachmann bekannte Heizelement eingesetzt werden. So ist es zum Beispiel auch denkbar, dass die Beheizung zum Beispiel mit einer Flüssigkeit erfolgt.

Das Heizelement 7 ist vorzugsweise in der Nähe des Bodens 9 des Innenbehälters 3 angeordnet. In der Nähe des Heizelementes 7 ist eine Ansaugöffnung 11 einer ersten Entnahmeleitung 13 angeordnet. Durch die Positionierung der Ansaugöffnung 11 der ersten Entnahmeleitung 13 in der Nähe des Heizelementes 7 kann bereits nach einer kurzen Auftauzeit, sofern das Reduktionsmittel im Innenbehälter 3 und im Außenbehälter 2 vollkommen durchgefroren war, flüssiges Reduktionsmittel entnommen werden. Die Ansaugöffnung 11 befindet sich weiterhin vorzugsweise in der Nähe des Bodens 9 des Innenbehälters 3, damit auch dann, wenn nur noch eine geringe Menge an Reduktionsmittel im Innenbehälter 3 enthalten ist, Reduktionsmittel aus diesem entnommen werden kann.

Der erfindungsgemäße Tank 1 zur Bevorratung eines Reduktionsmittels wird vorzugsweise in einem Kraftfahrzeug eingesetzt. Da sich ein Kraftfahrzeug bewegt und sich somit das Reduktionsmittel im Innenbehälter 3 und im Außenbehälter 2 bewegen kann, ist am Außenbehälter 2 ein Sumpf 15 ausgebildet. Der Sumpf 15 ist vorzugsweise als eine Ausbuchtung im Boden 17 des Außenbehälters 2 geformt. Durch den Sumpf 15 wird gewährleistet, dass auch unter Extrembedingungen, zum Beispiel Schräglagen des Fahrzeugs oder bei Kurvenfahrt, keine Luft, sondern flüssiges Reduktionsmittel angesaugt wird. Hierzu ist eine Ansaugöffnung 19 einer zweiten Entnahmeleitung 21 im Bereich des Sumpfes 15 angeordnet. Über die zweite Entnahmeleitung 21 wird flüssiges Reduktionsmittel aus dem Außenbehälter 2 entnommen.

Besonders bevorzugt sind die erste Entnahmeleitung 13 und die zweite Entnahmeleitung 21 beheizt. Hierzu umschließt zum Beispiel ein Heizelement die erste Entnahmeleitung 13 und die zweite Entnahmeleitung 21. Durch die Beheizung wird gegebenenfalls in den Entnahmeleitungen 13, 21 enthaltenes Reduktionsmittel geschmolzen. Weiterhin schmilzt auch das die Entnahmeleitungen 13, 21 umschließende Reduktionsmittel, so dass sich zwischen dem flüssigen Reduktionsmittel und einem Luftraum 33 im Tank 1 kein erstarrtes Reduktionsmittel mehr befindet. Wenn Reduktionsmittel aus dem Tank über eine der Entnahmeleitungen 13, 21 entnommen wird, bildet sich so kein Unterdruck unter einer Schicht aus erstarrtem Reduktionsmittel aus.

Der Innenbehälter 3 ragt vorzugsweise, wie in Figur 1 dargestellt, in den Sumpf 15. Durch die Positionierung des Heizelementes 7 in der Nähe des Bodens 9 des Innenbehälters 3 befindet sich auch die Ansaugöffnung 19 der zweiten Entnahmeleitung 21 in der Nähe des Heizelementes 7. Hierdurch wird gewährleistet, dass sowohl die Ansaugöffnung 11 der ersten Entnahmeleitung 13 als auch die Ansaugöffnung 19 der zweiten Entnahmeleitung 21 bereits nach einer kurzen Heizzeit aufgetaut sind.

Der mindestens eine Durchbruch 5 im Innenbehälter 3 ist so angeordnet, dass das Heizelement 7 vollständig mit Reduktionsmittel bedeckt ist, wenn der Innenbehälter 3 bis zu dem mindestens einen Durchbruch 5 mit Reduktionsmittel befüllt ist. Durch diese Positionierung des mindestens einen Durchbruchs 5 wird dann, wenn das Heizelement 7 vollständig bedeckt ist, Wärme nur an das Reduktionsmittel abgegeben.

Um flüssiges Reduktionsmittel aus dem Außenbehälter 2 und dem Innenbehälter 3 entnehmen zu können, sind die erste Entnahmeleitung 13 und die zweite Entnahmeleitung 21 mit einer Pumpe 23 verbunden. Als Pumpe 23 eignet sich jede beliebige Pumpe, mit der eine Flüssigkeit gefördert werden kann.

Bei Temperaturen unterhalb dem Schmelzpunkt des Reduktionsmittels erstarrt dieses. Der Erstarrungsvorgang beginnt an den Wandungen des Außenbehälters 2 und zieht sich ins Innere des Außenbehälters 2 fort. Wenn als Reduktionsmittel eine wässrige Harnstofflösung eingesetzt wird, erstarrt diese bei einer Temperatur im Bereich zwischen -11°C und -40°C. Die Temperatur hängt dabei davon ab, wieviel Frostschutzmittel oder welches Frostschutzmittel dem Reduktionsmittel zugesetzt wurde. Bis zum vollständigen Erstarren des Reduktionsmittels sind im Allgemeinen mehrere Tage erforderlich. Um die gesetzlichen Anforderungen an die Abgaszusammensetzung einhalten zu können, ist es jedoch erforderlich, dass auch bei vollständig erstarrtem Reduktionsmittel eine Stickoxid-Reduktion im Abgas bereits kurze Zeit nach dem Starten der Verbrennungskraftmaschine durchgeführt wird. Hierzu ist es notwendig, das Reduktionsmittel schnell aufzutauen. In der Darstellung gemäß der einzigen Figur ist das Reduktionsmittel nur teilweise erstarrt. Erstarrte Bereiche des Reduktionsmittels sind mit dem Bezugszeichen 25 gekennzeichnet. Im Bereich um das Heizelement 7 ist das Reduktionsmittel bereits aufgetaut und liegt somit als Flüssigkeit vor. Der Bereich, in dem das Reduktionsmittel als Flüssigkeit vorliegt, ist mit Bezugszeichen 27 bezeichnet. Wenn das Reduktionsmittel im Innenbehälter 3 und im Außenbehälter 2 vollständig erstarrt ist, beginnt dieses, wenn Wärme über das Heizelement 7 eingetragen wird, zunächst in der Umgebung um das Heizelement 7 zu schmelzen. Sobald das Reduktionsmittel im Bereich um das Heizelement 7 geschmolzen ist, kann dieses über die Ansaugöffnung 11 und die erste Entnahmeleitung 13 aus dem Innenbehälter 3 entnommen werden.

Um den Schmelzprozess zu beschleunigen, wird eine größere Menge an flüssigem Reduktionsmittel entnommen, als für die katalytische Reduktion der Stickoxide benötigt wird. Das nicht benötigte flüssige Reduktionsmittel wird über einen Rücklauf 29 in den Innenbehälter 3 zurückgeführt. Das erwärmte, flüssige Reduktionsmittel, welches über den Rücklauf 29 in den Innenbehälter 3 zurückgeführt wird, unterstützt das Heizelement 7 beim Schmelzen des erstarrten Reduktionsmittels 25. Durch die Bewegung des Kraftfahrzeuges schwappt das in den Innenbehälter 3 zurückgeführte flüssige Reduktionsmittel durch den mindestens einen Durchbruch 5 in den Außenbehälter 2. Dies führt dazu, dass das erstarrte Reduktionsmittel 25 im Außenbehälter 2 ebenfalls zu schmelzen beginnt. Aufgrund der Schwappbewegung des flüssigen Reduktionsmittels 27 entsteht am erstarrten Reduktionsmittel 25 eine schräge Grenzfläche 31 zu einem Luftraum 33, der sich oberhalb des Reduktionsmittels befindet. Um zu vermeiden, dass der Außenbehälter 2 reißt, wenn das Reduktionsmittel vollständig erstarrt ist, wird der Außenbehälter 2 nicht vollständig mit dem Reduktionsmittel befüllt, sondern es befindet sich immer ein kleiner Luftraum 33 oberhalb dem Reduktionsmittel. Der Luftraum 33 ist im Allgemeinen mit Umgebungsluft gefüllt.

Aufgrund der Nähe des Sumpfes 15 zum Heizelement 7 beginnt das Reduktionsmittel im Sumpf 15 zu schmelzen, sobald das Reduktionsmittel am Boden 9 des Innenbehälters 3 geschmolzen ist. Auch in unmittelbarer Umgebung um den Innenbehälter 3 beginnt das Reduktionsmittel zu schmelzen, sobald das Reduktionsmittel im Innenbehälter 3 geschmolzen ist. Sobald das Reduktionsmittel im Sumpf 15 geschmolzen ist und das flüssige Reduktionsmittel 27 im Außenbehälter 2 Kontakt zum Luftraum 33 hat, wird flüssiges Reduktionsmittel 27 über die Ansaugöffnung 19 und die zweite Entnahmeleitung 21 entnommen. Auch das über die zweite Entnahmeleitung 21 entnommene flüssige Reduktionsmittel 27, welches nicht für die katalytische Umsetzung benötigt wird, wird über den Rücklauf 29 in den Innenbehälter 3 zurückgeführt. Dieses unterstützt ebenfalls das Heizelement 7 beim Schmelzen des erstarrten Reduktionsmittels 25, bis das gesamte Reduktionsmittel geschmolzen ist.

In der ersten Entnahmeleitung 13 ist ein erstes Drosselelement 35 ausgebildet. Ein zweites Drosselelement 37 ist in der zweiten Entnahmeleitung 21 enthalten. Über die Drosselelemente 35, 37 sind die Entnahmeleitungen 13, 21 so aufeinander abgestimmt, dass dann, wenn sowohl im Innenbehälter 3 als auch im Außenbehälter 2 flüssiges Reduktionsmittel 27 vorliegt, das Reduktionsmittel aus beiden Behältern 2, 3 entnommen wird. Das erste Drosselelement 35 und das zweite Drosselelement 37 sind dabei so ausgelegt, dass der Innenbehälter 3 immer bis zum mindestens einen Durchbruch 5 gefüllt ist. Erst dann, wenn weniger Flüssigkeit enthalten ist als das Volumen des Innenbehälters 3 bis an die Unterkante des mindestens einen Durchbruches 5, sinkt der Flüssigkeitspegel im Innenbehälter 3 weiter ab.

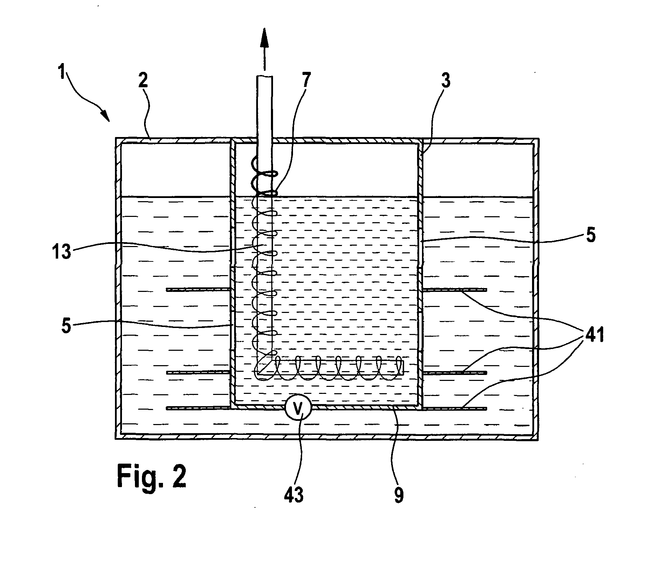

In Figur 2 ist ein ausgebildeter Tank zur Bevorratung eines Reduktionsmittels dargestellt, bei dem am Innenbehälter Wätmeleitbleche angebracht sind.

Der Tank 1 umfasst in der in Figur 2 dargestellten Ausführungsform den Innenbehälter 3, der im Außenbehälters 2 aufgenommen ist. Am Innenbehälter 3 sind Warmeleitbleche 41 ausgebildet. Die Wärmeleitbleche 41 ragen in den Außenbehälter 2. Wenn das Reduktionsmittel im Innenbehälters 3 erwärmt worden ist, gibt dieses Wärme an die Wand des Innenbehälters 3 ab. Über die Wand des Innenbehälters 3 wird die Wärme an die Wärmeleitbleche 41 übertragen. Die Wärmeleitbleche 41 erwärmen sich und geben so Wärme an das im Außenbehälter 2 enthaltende Reduktionsmittel ab. Die Wärmeleitbleche 41 sind zum Beispiel als Rippen um den Innenbehälter 3 ausgebildet Die Oberfläche der Wärmeleitbleche 41 kann glatt oder strukturiert sein. Bevorzugt ist die Oberfläche der Wärmeleitbleche strukturiert, da diese dann eine größere Oberfläche aufwiesen. Um zu vermeiden, dass in der Struktur der Wärmeleitbleche 41 Reduktionsmittel zurückbleibt, ist die Struktur vorzugsweise so ausgebildet, dass das auf den Wärmeleitblechen 41 zurückgehaltene Reduktionsmittel von diesen ablaufen kann.

Um das Reduktionsmittel aus dem Tank 1 entnehmen zu können, ist im Innenbehälter 3 die Entnahmeleitung 13 angeordnet. Die Entnahmeleitung 13 führt zunächst zu einer hier nicht dargestellten Förderpumpe und von dort zu einem Dosierventil, mit welchem das Reduktionsmittel in den SCR-Katalysator eindosiert wird. Damit auch dann, wenn das Reduktionsmittel im Tank 1 vollständig durchgefroren und erstarrt ist, Reduktionsmittel aus dem Innenbehälters 3 entnommen werden kann, ist die Entnahmeleitung 13 vom Heizelement 7, welches als Heizspirale ausgebildet ist, umschlossen. Sobald vom Heizelement 7 Wärme abgegeben wird, wird diese auch ins Innere der Entnahmeleitung 13 übertragen. So taut auch das in der Entnahmeleitung 13 enthaltende Reduktionsmittel auf.

Anders als bei der in Figur 1 dargestellten Ausführungsform ist in der hier dargestellten Ausftihrungsform nur eine Entnahmeleitung vorgesehen. Damit aus dem Außenbehälter 2 Reduktionsmittel in den Innenbehälter 3 strömen kann, ist am Boden 9 des Innenbehälters 3 ein Ventil 43 ausgebildet. Das Ventil 43 ist zum Beispiel ein T-Ventil, welches dann öffnet, wenn der auf das Ventil wirkende Druck im Außenbehälter 2 größer ist als der Druck im Innenbehälter 3. Dies ist immer dann der Fall, wenn der Füllstand im Außenbehälters 2 höher ist als der Füllstand im Innenbehälter 3.

Auch bei der in Figur 2 dargestellten Ausführungsform wird das Schmelzen des Reduktionsmittels im Außenbehälter 2 durch Schwappbewegungen des bereits aufgetauten Reduktionsmittels unterstützt. Über Durchbrüche 5 im Innenbehälter 3 kann erwärmtes Reduktionsmittel aus dem Innenbehälter 3 in den Außenbehälter 2 strömen. Eine derartige Strömungsbewegung wird insbesondere dann hervorgerufen, wenn der Tank 1 bewegt wird Wenn der Tank 1 in einem Kraftfahrzeug enthalten ist, ist dies zum Beispiel immer dann der Fall, wenn sich das Kraftfahrzeug bewegt.

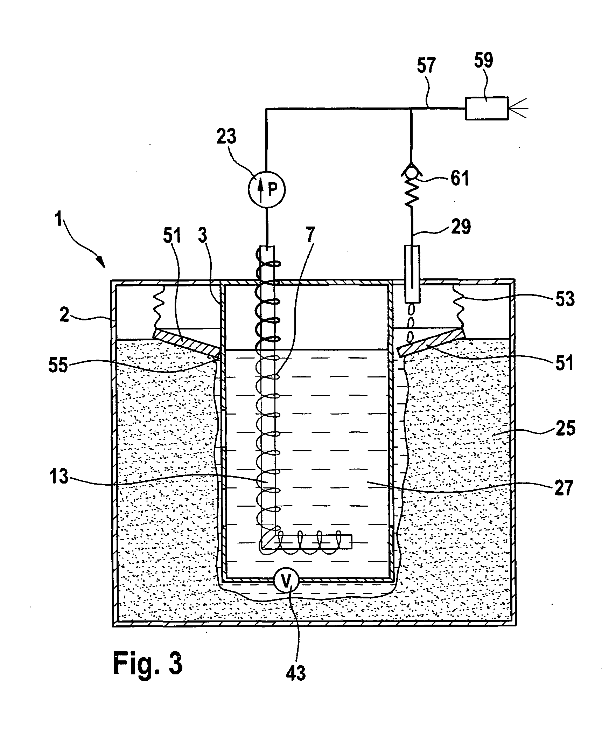

In Figur 3 ist ein ausgebildeter Tank mit einem trichterförmigen Element dargestellt.

Auch bei dieser Ausführungsform wird zunächst das Reduktionsmittel im Innenbehälter 3 aufgetaut. Hierzu ist im Innenbehälter 3 das Heizelement 7 aufgenommen. Wie bei der in Figur 2 dargestellten Ausführungsform ist das Heizelement 7 als Heizspirale ausgebildet und um die Entnahmeleitung 13 angeordnet, damit das in der Entnahmeleitung 13 enthaltene Reduktionsmittel durch das Heizelement 7 aufgetaut werden kann. Um den Auftauvorgang des erstarrten Reduktionsmittels 25 im Außenbehälter 2 zu untersützen, ist der Innenbehälter 3 von einem trichterförmigen Element 51 umgeben. Das trichterförmige Element 51 wird in der hier dargestellten Ausführungsform durch eine Aufhängung 53 geführt. Das trichterförmige Element 51 ist aus einem Material gefertigt, welches gut wärmeleitfähig ist und welches eine geringere Dichte aufweist als das Reduktionsmittel. Hierdurch wird gewährleistet, dass das trichterförmige Element 51 immer auf dem Reduktionsmittel schwimmt. Auch wenn das Reduktionsmittel erstarrt ist, liegt das trichterförmige Element 51 auf dem erstarrten Reduktionsmittel 25 auf. Bevorzugtes Material für das trichterförmige Element 51 ist Kunststoff oder Edelstahl.

Damit das trichterförmige Element 51 den Auftauvorgang unterstützen kann, ist der Rücklauf 29, über welchen erwärmtes Reduktionsmittel in den Tank 1 zurückgeführt wird, oberhalb des trichterförmigen Elements 51 angeordnet. Das über den Rücklauf 29 zurückgeführte flüssige Reduktionsmittel tropft so auf das trichterförmige Element 51. Durch das flüssige Reduktionsmittel erwärmt sich das trichterförmige Element 51 und gibt die Wärme an das erstarrte Reduktionsmittel 25 ab. Das erstarrte Reduktionsmittel 25 taut im Bereich des trichterförmigen Elementes 51 auf. Das flüssige Reduktionsmittel fließt über das trichterförmige Element 51 ab und durch einen spalt 55, der zwischen dem Innenbehälter 3 und dem trichterförmigen Element 51 ausgebildet ist, entlang der Außenwand des Innenbehälters 3 in den Außenbehälter 2. Hierdurch wird zunächst der Auftauvorgang des flüssigen Reduktionsmittels entlang der Wandung des Innenbehälters 3 unterstützt. Durch Bewegung des Kraftfahrzeuges, wenn der Tank 1 in einem Kraftfahrzeug eingesetzt wird, beginnt das flüssige Reduktionsmittel 27 sich zu bewegen und unterstützt so den Auftauvorgang des erstarrten Reduktionsmittels 25.

Neben der Aufhängung 53 ist es zusätzlich möglich, dass das trichterförmige Element 51 am Innenbehälter 3 geführt wird. Durch die Führung des trichterförmigen Elementes 51 wird vermieden, dass dieses verkantet.

Die Entnahme des flüssigen Reduktionsmittels erfolgt bei der in Figur 3 dargestellten Ausführungsform ebenso wie bei der in Figur 2 dargestellten Ausführungsform über die Entnahmeleitung 13, die mit der Pumpe 23 verbunden ist. Von der Pumpe 23 wird das flüssige Reduktionsmittel über eine Leitung 57 zu einem Dosierventil 59 transportiert, mit welchem das Reduktionsmittel in den SCR-Katalysator zugegeben wird. Aus der Leitung 57 zweigt der Rücklauf 29 ab. Das Reduktionsmittel, welches über die Pumpe 23 in Richtung des Dosierventils 59 gefördert wird, aber nicht vom Dosierventil 59 dem SCR-Katalysator zugegeben wird, wird über den Rücklauf 29 zurückgeführt. Um den Förderdruck in der Leitung 57 konstant zu halten, ist im Rücklauf 29 ein Rückschlagventil 61 aufgenommen. Dieses öffnet jeweils erst dann, wenn der Druck in der Leitung 57 über den Öffnungsdruck des Rückschlagventils 61 ansteigt.

Wie auch bei der in Figur 2 dargestellten Ausführungsform erfolgt das Befüllen des Innenbehälters 3 mit dem im Außenbehälter 2 enthaltenen Reduktionsmittel über das Ventil 43, welches hier ebenfalls als T-Ventil ausgeführt ist. Neben dem als T-Ventil ausgebildeten Ventil ist als Ventil 43 selbstverständlich jedes weitere Ventil einsetzbar, welches durch den hydrostatischen Druck des Reduktionsmittels im Außentank 2 geöffnet werden kann. Es ist bevorzugt, dass das Ventil 43 nicht fremd betätigt ist.

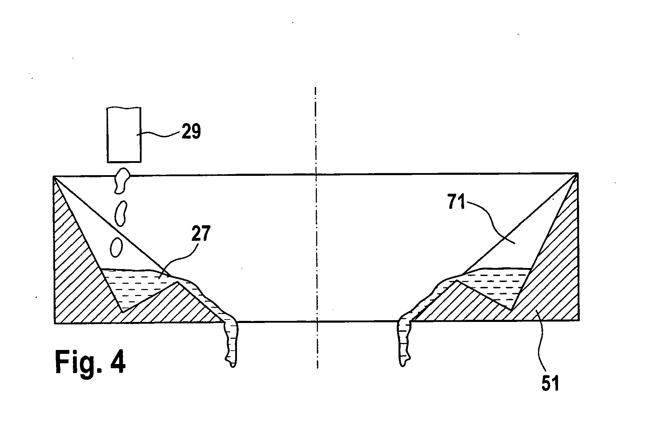

In Figur 4 ist das trichterförmige Element 51 im Detail dargestellt.

Im trichterförmigen Element 51 ist eine Nut 71 ausgebildet. In der Nut 71 sammelt sich flüssiges Reduktionsmittel 27, welches durch den Rücklauf 29 in den Tank zurückfließt. Durch das in der Nut 7 gesammelte flüssige Reduktionsmittel 27 erwärmt sich das trichterförmige Element 51. Da das trichterförmige Element 51 vorzugsweise aus einem gut wärmeleitfähigen Material gefertigt ist, gibt es die Wärme des flüssigen Reduktionsmittels 27 an die Umgebung ab. Wenn das trichterförmige Element 51 nun auf erstarrtem Reduktionsmittel 25 aufliegt, gibt es so die Wärme des flüssigen Reduktionsmittels 27 an das erstarrte Reduktionsmittel 25 ab, so dass das erstarrte Reduktionsmittel beginnt zu schmelzen. Hierdurch wird durch das trichterförmige Element 51 der Auftauvorgang unterstützt.

Bei allen hier dargestellten Ausführungsformen wird der Auftauvorgang des Reduktionsmittels im Außenbehälter 2 durch Schwappbewegungen des flüssigen Reduktionsmittels 27 unterstützt, wobei die Schwappbewegungen des flüssigen Reduktionsmittels 27 durch Bewegungen des Tanks 1 erzeugt werden. Insbesondere bei Verwendung des Tanks 1 in einem Kraftfahrzeug werden die Schwappbewegungen durch die Bewegungen des Kraftfahrzeuges generiert.

## Patentansprüche

1. Tank zur Bevorratung eines Reduktionsmittels, insbesondere eines flüssigen Reduktionsmittels, mit dem Stickoxide aus Abgasen von Verbrennungskraftmaschinen zu Stickstoff und Wasser reduziert werden, einen Außenbehälter (2) umfassend, in dem ein Innenbehälter (3) aufgenommen ist, wobei im Innenbehälter (3) ein Heizelement (7) aufgenommen ist und mit einer Entnahmevorrichtung (13) das flüssige Reduktionsmittel entnommen werden kann, wobei der Innenbehälter (3) so mit dem Außenbehälter (2) verbunden ist, dass flüssiges Reduktionsmittel (25) aus dem Innenbehälter (3) in den Außenbehälter (2) strömen kann, wobei im Innenbehälter (3) mindestens ein Durchbruch ausgebildet ist, durch welchen das Reduktionsmittel aus dem Außenbehälter (1) in den Innenbehälter (3) und umgekehrt strömen kann **dadurch gekennzeichnet, dass** der mindestens eine Durchbruch (5) im Innenbehälter (3) so angeordnet ist, dass das Heizelement (7) vollständig von Reduktionsmittel bedeckt ist, wenn der Innenbehälter (3) bis zu dem mindestens einen Durchbruch (5) mit Reduktionsmittel gefüllt ist, und wobei der mindestens eine Durchbruch (5) oberhalb des Heizelementes (7) angeordnet ist, so dass bereits aufgetautes Reduktionsmittel aus dem Innenbehälter (3) in den Außenbehälter (2) strömen kann und am Innenbehälter (3) Wärmeleitbleche (41) ausgebildet sind, die in den Außenbehälter (2) ragen.

2. Vorrichtung nach Anspruch 1, **dadurch gekennzeichnet, dass** ein Rücklauf (2) in den Innenbehälter (3) mündet, über den nicht verbrauchtes flüssiges Reduktionsmittel zurückgeführt wird.

3. Tank nach einem der Ansprüche 1 und 2, **dadurch gekennzeichnet, dass** der Innenbehälter (3) vom einem trichterförmig ausgebildeten Element (51) umschlossen ist.

4. Tank nach Anspruch 3, **dadurch gekennzeichnet, dass** das trichterförmige Element (51) aus einem Material gefertigt ist, das eine geringere Dichte aufweist als das Reduktionsmittel.

5. Tank nach Anspruch 3 oder 4, **dadurch gekennzeichnet, dass** ein Rücklauf (29) so in den Außenbehälter (2) mündet, dass Reduktionsmittel, das über den Rücklauf (29) in den Tank 1 zurückgeführt wird, auf das trichterförmige Element (51) fließt.

6. Tank nach einem der Ansprüche 3 bis 5, **dadurch gekennzeichnet, dass** in dem trichterförmigen Element (51) eine umlaufende Nut (71) ausgebildet ist, in der sich flüssiges Reduktionsmittel, das über den Rücklauf (29) in den Tank 1 zurückgeführt wird, sammelt.

7. Vorrichtung nach einem der Ansprüche 1 bis 6, **dadurch gekennzeichnet, dass** im Boden (17) des Außenbehälters (2) ein Sumpf (15) ausgebildet ist.

8. Vorrichtung nach Anspruch 1, **dadurch gekennzeichnet, dass** eine zweite Entnahmeleitung (21), mit der Reduktionsmittel aus dem Außenbehälter (2) entnommen werden kann, im Sumpf (15) mündet.

9. Vorrichtung nach einem der Ansprüche 1 bis 8, **dadurch gekennzeichnet, dass** eine erste Entnahmeleitung (13) der Entnahmevorrichtung und die zweite Entnahmeleitung (21) jeweils in der Nähe des Heizelementes (7) im Innenbehälter (3) bzw. im Außenbehälter (2) münden.

10. Vorrichtung nach einem der Ansprüche 1 bis 9, **dadurch gekennzeichnet, dass** in der ersten Entnahmeleitung (13) und in der zweiten Entnahmeleitung (21) Drosselelemente (35, 37) ausgebildet sind.

11. Vorrichtung nach Anspruch 10, **dadurch gekennzeichnet, dass** die Drosselelemente (35, 37) in der ersten Entnahmeleitung (13) und in der zweiten Entnahmeleitung (21) so abgestimmt sind, dass gleichzeitig aus dem Innenbehälter (3) und aus dem Außenbehälter (2) Reduktionsmittel entnommen wird, wenn sowohl im Innenbehälter (3) als auch im Außenbehälter (2) Reduktionsmittel enthalten ist.

12. Vorrichtung nach Anspruch 10 oder 11, **dadurch gekennzeichnet, dass** die Drosselelemente (35, 37) so aufeinander abgestimmt sind, dass der Innenbehälter (3) aufgrund von rücklaufendem Reduktionsmittel bis zu dem mindestens einen Durchbruch (5) befüllt ist.

## Claims

1. Tank for storing a reducing agent, in particular a liquid reducing agent, by means of which nitrogen oxides from exhaust gases of internal combustion engines are reduced to form nitrogen and water, comprising an outer container (2) in which an inner container (3) is held, a heating element (7) being held in the inner container (3), and it being possible for the liquid reducing agent to be extracted by means of an .extraction device (13), the inner container (3) being connected to the outer container (2) such that liquid reducing agent (25) can flow out of the inner container (3) into the outer container (2), at least one aperture being formed in the inner container (3), through which aperture the reducing agent can flow out of the outer container (2) into the inner container (3) and vice versa, **characterized in that** the at least one aperture (5) in the inner container (3) is arranged such that the heating element (7) is completely covered by reducing agent when the inner container (3) is filled with reducing agent up to the at least one aperture (5), and the at least one aperture (5) being arranged above the heating element (7) such that reducing agent that has already thawed can flow from the inner container (3) into the outer container (2), and heat-conducting plates (41) being formed on the inner container (3), which heat-conducting plates project into the outer container (2).

2. Tank according to Claim 1, **characterized in that** a return line (29) via which unconsumed liquid reducing agent is returned opens into the inner container (3).

3. Tank according to either of Claims 1 and 2, **characterized in that** the inner container (3) is surrounded by a funnel-shaped element (51).

4. Tank according to Claim 3, **characterized in that** the funnel-shaped element (51) is produced from a material which has a lower density than the reducing agent.

5. Tank according to Claim 3 or 4, **characterized in that** a return line (29) opens into the outer container (2) such that reducing agent which is returned into the tank (1) via the return line (29) flows onto the funnel-shaped element (51).

6. Tank according to one of Claims 3 to 5, **characterized in that** an encircling groove (71) is formed in the funnel-shaped element (51), in which groove liquid reducing agent which is returned into the tank (1) via the return line (29) accumulates.

7. Tank according to one of Claims 1 to 6, **characterized in that** a sump (15) is formed in the base (17) of the outer container (2).

8. Tank according to Claim 1, **characterized in that** a second extraction line (21) via which reducing agent can be extracted from the outer container (2) opens out in the sump (15).

9. Tank according to one of Claims 1 to 8, **characterized in that** a first extraction line (13) of the extraction device and the second extraction line (21) open out in the inner container (3) and in the outer container (2) respectively, in each case in the vicinity of the heating element (7).

10. Tank according to one of Claims 1 to 9, **characterized in that** throttle elements (35, 37) are formed in the first extraction line (13) and in the second extraction line (21).

11. Tank according to Claim 10, **characterized in that** the throttle elements (35, 37) in the first extraction line (13) and in the second extraction line (21) are coordinated such that reducing agent is extracted simultaneously from the inner container (3) and from the outer container (2) if reducing agent is contained both in the inner container (3) and also in the outer container (2).

12. Tank according to Claim 10 or 11, **characterized in that** the throttle elements (35, 37) are coordinated with one another such that the inner container (3) is filled up to the at least one aperture (5) on account of returning reducing agent.

## Revendications

1. Réservoir d'alimentation d'un agent de réduction, notamment d'un agent de réduction fluide, avec lequel des oxydes d'azote provenant de gaz d'échappement de moteurs à combustion interne sont réduits en azote et en eau, comprenant un récipient extérieur (2) dans lequel est reçu un récipient intérieur (3), un élément chauffant (7) étant reçu dans le récipient intérieur (3) et l'agent de réduction fluide pouvant être prélevé avec un dispositif de prélèvement (13), le récipient intérieur (3) étant connecté au récipient extérieur (2) de telle sorte que l'agent de réduction fluide (25) puisse s'écouler hors du récipient intérieur (3) dans le récipient extérieur (2), au moins un orifice étant réalisé dans le récipient intérieur (3), à travers lequel l'agent de réduction peut s'écouler hors du récipient extérieur (2) dans le récipient intérieur (3) et inversement, **caractérisé en ce que** l'au moins un orifice (5) est disposé dans le récipient intérieur (3) de telle sorte que l'élément chauffant (7) soit complètement recouvert d'agent de réduction, lorsque le récipient intérieur (3) est rempli d'agent de réduction jusqu'à l'au moins un orifice (5), et l'au moins un orifice (5) étant disposé au-dessus de l'élément chauffant (7) de telle sorte que l'agent de réduction déjà dégivré puisse s'écouler hors du récipient intérieur (3) dans le récipient extérieur (2) et des tôles conductrices de la chaleur (41) étant réalisées sur le récipient intérieur, lesquelles pénètrent dans le récipient extérieur (2).

2. Réservoir selon la revendication 1, **caractérisé en ce qu'**un retour (29) débouche dans le récipient intérieur (3), par le biais duquel l'agent de réduction fluide non utilisé est renvoyé.

3. Réservoir selon l'une quelconque des revendications 1 et 2, **caractérisé en ce que** le récipient intérieur (3) est entouré par un élément (51) réalisé en forme d'entonnoir.

4. Réservoir selon la revendication 3, **caractérisé en ce que** l'élément en forme d'entonnoir (51) est fabriqué en un matériau qui présente une plus faible épaisseur que l'agent de réduction.

5. Réservoir selon la revendication 3 ou 4, **caractérisé en ce qu'**un retour (29) débouche dans le récipient extérieur (2), de telle sorte que l'agent de réduction, qui est renvoyé par le biais du retour (29) dans le réservoir (1), s'écoule sur l'élément en forme d'entonnoir (51).

6. Réservoir selon l'une quelconque des revendications 3 à 5, **caractérisé en ce qu'**une rainure périphérique (71) est réalisée dans l'élément en forme d'entonnoir (51), dans laquelle s'accumule l'agent de réduction fluide qui est renvoyé par le biais du retour (29) dans le réservoir (1).

7. Réservoir selon l'une quelconque des revendications 1 à 6, **caractérisé en ce qu'**un puisard (15) est réalisé dans le fond (17) du récipient extérieur (2).

8. Réservoir selon la revendication 1, **caractérisé en ce qu'**une deuxième conduite de prélèvement (21), avec laquelle l'agent de réduction peut être prélevé du récipient extérieur (2), débouche dans le puisard (15).

9. Réservoir selon l'une quelconque des revendications 1 à 8, **caractérisé en ce qu'**une première conduite de prélèvement (13) du dispositif de prélèvement et la deuxième conduite de prélèvement (21) débouchent à chaque fois à proximité de l'élément chauffant (7) dans le récipient intérieur (3), respectivement dans le récipient extérieur (2).

10. Réservoir selon l'une quelconque des revendications 1 à 9, **caractérisé en ce que** des éléments d'étranglement (35, 37) sont réalisés dans la première conduite de prélèvement (13) et dans la deuxième conduite de prélèvement (21).

11. Réservoir selon la revendication 10, **caractérisé en ce que** les éléments d'étranglement (35, 37) dans la première conduite de prélèvement (13) et dans la deuxième conduite de prélèvement (21) sont adaptés de telle sorte que l'agent de réduction soit simultanément prélevé du récipient intérieur (3) et du récipient extérieur (2) lorsque l'agent de réduction est contenu à la fois dans le récipient intérieur (3) et dans le récipient extérieur (2).

12. Réservoir selon la revendication 10 ou 11, **caractérisé en ce que** les éléments d'étranglement (35, 37) sont adaptés l'un à l'autre de telle sorte que le récipient intérieur (3) soit rempli avec de l'agent de réduction renvoyé jusqu'à l'au moins un orifice (5).
